Europäisches Patentamt

European Patent Office

Office européen des brevets

(19)

(11) Publication number: **0 289 732 B1**

(12) # EUROPEAN PATENT SPECIFICATION

(45) Date of publication of patent specification: **30.12.92**  (51) Int. Cl.⁵: **G21C  3/32**

(21) Application number: **88103287.4**

(22) Date of filing: **03.03.88**

(54) Reconstitutable nuclear fuel assembly.

(30) Priority: **23.03.87 US 30005**

(43) Date of publication of application:
**09.11.88 Bulletin  88/45**

(45) Publication of the grant of the patent:
**30.12.92 Bulletin  92/53**

(84) Designated Contracting States:
**BE DE ES FR GB IT SE**

(56) References cited:
**EP-A- 0 196 610
EP-A- 0 196 916
EP-A- 0 206 586
US-A- 4 631 168**

(73) Proprietor: **WESTINGHOUSE ELECTRIC COR-
PORATION
Westinghouse Building Gateway Center
Pittsburgh Pennsylvania 15222(US)**

(72) Inventor: **Shallenberger, John Milton
120 West Chapel Ridge Road
Pittsburgh Pennsylvania 15238(US)**
Inventor: **Ferlan, Stephen Joseph
895 Rita Drive
Pittsburgh Pennsylvania 15221(US)**

(74) Representative: **Patentanwälte Dipl.-Ing. R.
Holzer Dipl.-Ing. (FH) W. Gallo
Ludwigstrasse 26
W-8900 Augsburg(DE)**

## Description

The present invention relates generally to reconstitutable fuel assemblies for nuclear reactors and, more particularly, to an arrangement for releasably attaching the top nozzle of a reconstitutable nuclear fuel assembly to a guide thimble.

In a typical nuclear reactor, the reactor core includes a large number of fuel assemblies each of which is composed of top and bottom nozzles, with a plurality of elongate transversely spaced guide thimbles extending longitudinally between the nozzles, and a plurality of transverse support grids axially spaced along and attached to the guide thimbles. Each fuel assembly includes further a plurality of elongate fuel rods transversely spaced apart from one another and from the guide thimbles, and supported by the transverse grids between the top and bottom nozzles. The fuel rods, each of which contains fissile material, are grouped together in an array organized to provide a neutron flux in the core sufficient to support a high rate of nuclear fission. The reactor has control rods which can be inserted into the guide thimbles to control the fission reaction which releases a large amount of energy in the form of heat. A liquid coolant is pumped upwardly through the core in order to extract some of the heat generated in the core for the production of useful work.

During operation in the nuclear reactor, the fuel rods may occasionally develop cracks along their lengths due primarily to internal stresses. These defective fuel rods must be replaced in the fuel assemblies, and this replacement must occur under water since the fuel assemblies become highly radioactive during their use in the reactor. To gain access to a defective fuel rod, it is necessary to remove the top and/or bottom nozzle of the fuel assembly. Reconstitutable fuel assemblies exist which are designed with removable nozzles. Typically, such removable nozzles have been either threadedly connected to the guide thimbles or attached thereto by means of bulge/groove arrangements employing locking tubes, such as disclosed in U.S. Patent US-A-4,631,168.

In Applicants' European patent publication No. A1-0 196 916, there is disclosed a reconstitutable nuclear fuel assembly having re-usable locking tubes with preformed dimples. Some locking tubes in such fuel assemblies were found upon reconstitution to be seated too low (a locking tube typically is deemed seated too low when it is offset more than about 0.76 mm from and beneath the top of the adapter plate of the top nozzle). A study revealed that this problem had two possible causes:- A locking tube may be seated too low already at the time of installation, and a locking tube which was properly seated initially may become improperly seated too low due to the force exerted thereon when the fuel assembly is lifted from the core, such as at the reactor site at the time of loading the fuel assembly into the reactor core. A low-seated locking tube requires special (longer-handled) tooling for its removal in the event the fuel assembly is to be reconstituted, which complicates the underwater reconstitution operation.

It is the principal object of the invention to alleviate this problem of inadvertent locking-tube displacement.

The invention accordingly resides in an arrangement for releasably affixing the top nozzle of a reconstitutable nuclear fuel assembly to an upper end portion of a guide thimble, said arrangement comprising (a) a tubular inner socket defined by said upper end portion of the guide thimble, said inner socket having an upper rim portion with a peripheral bulge projecting radially outward therefrom and defining a substantially annular concavity on the inside of said rim portion, said tubular inner socket having formed therein elongate slots which extend longitudinally from the upper end thereof and through said upper rim portion, and which are angularly spaced apart; (b) an outer socket which extends through an adapter plate forming part of the top nozzle and has a smaller-diameter upper portion, a larger-diameter lower portion for slideably receiving part of the inner socket including said upper rim portion thereof, and a peripheral ledge formed between the upper and lower portions, said lower portion having an annular groove for receiving said peripheral bulge formed in a wall portion thereof proximate said ledge; and (c) a locking tube which is slideably insertable into the inner socket through said upper portion of the outer socket and comprises a tubular body having a resiliently flexible wall with dimples projecting from the outer surface thereof; characterized in that said dimples comprise at least one upper dimple and at least two lower dimples, said upper and lower dimples being arranged in a manner such that, when the locking tube is in a predetermined locking position thereof within said inner socket, said or each upper dimple has a tip thereof disposed beneath and proximate said ledge so as, in cooperation therewith, to resist raising of the locking tube from said predetermined locking position, and said lower dimples each has a tip thereof disposed above and proximate a surface portion of said inner socket defining a lower edge portion of said concavity so as, in cooperation therewith, to resist lowering of the locking tube from said predetermined locking position, said lower dimples being angularly spaced apart a distance different from the angular spacing between said elongate slots of the inner socket.

More particularly, the tip of said or each upper dimple is spaced from the longitudinal centerline of said tubular body a distance greater than half the diameter of said smaller-diameter upper portion of the outer socket; the tip of each of said lower dimples is spaced from the longitudinal centerline of said tubular body a distance greater than the difference between the wall thickness of said rim portion of the inner socket and half the diameter of the larger-diameter lower portion of the outer socket; and the spacing between the upper and lower dimples is less than the distance existing between said ledge and the lowermost edge of said concavity when said peripheral bulge is lodged in the annular groove of the outer socket.

Preferably, the locking tube has two upper dimples and four said lower dimples, the upper dimples preferably being disposed on the tubular body at locations substantially diametrically opposed to each other. In an arrangement wherein the inner socket has four elongate slots formed therein, the lower dimples preferably are arranged in two pairs, the lower dimples of each pair being disposed on said tubular body at locations substantially diametrically opposed to each other, and the two pairs of lower dimples being angularly spaced apart between ten and fourty-five, and preferably thirty, degrees. The upper dimples preferably also are substantially aligned, in the longitudinal direction of the locking tube, with the lower dimples of one of the two pairs.

A preferred embodiment of the invention will now be described, by way of example only, with reference to the accompanying drawings, in which:-

Figure 1 is a vertically foreshortened elevational view of a reconstitutable nuclear fuel assembly;

Figure 2 is a sectioned, exploded view of the components of an attachment arrangement embodying the invention;

Figure 3 is a sectioned, assembled view of the components of the attachment arrangement shown in Figure 2;

Figure 4 is a top plan view, as seen along the arrows 4-4 in Fig. 2, of the component constituting the inner socket of the arrangement;

Figure 5 is an enlarged partial view showing how the dimples on the locking tube hold the latter in its proper locking position;

Figure 6 is a side elevational view of the reusable locking tube, as seen along the arrows 6-6 of Figure 2;

Figure 7 is a sectional plan view of the locking tube, as seen along arrows 7-7 of Figure 6; and

Figure 8 is a sectional plan view of the locking tube, as seen along arrows 8-8 of Figure 6.

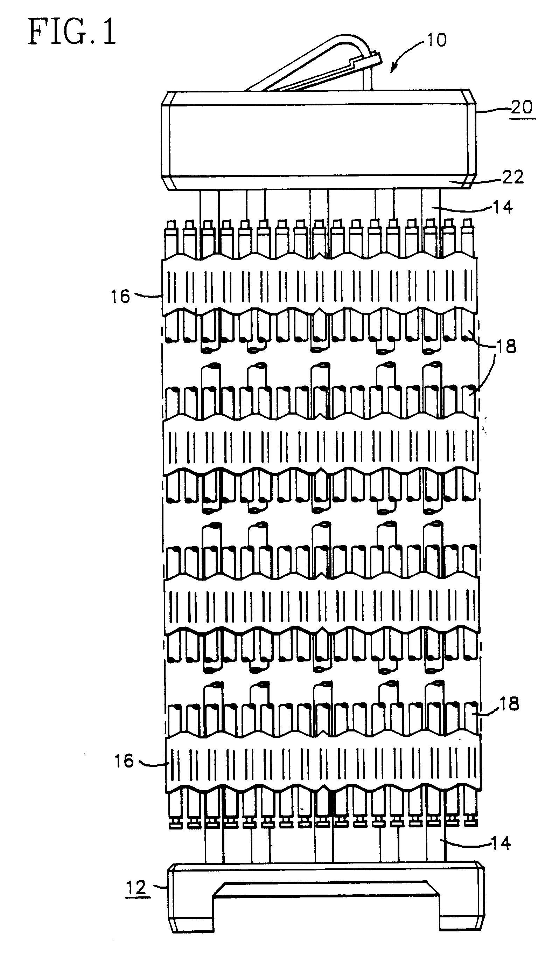

Referring initially to Fig. 1 of the drawings illustrating a typical nuclear fuel assembly 10 for a pressurized water reactor (PWR) in vertically foreshortened form, the fuel assembly 10 comprises a bottom nozzle 12 for supporting the assembly on the lower core plate (not shown) in the core region of a nuclear reactor, a plurality of guide thimbles 14 extending longitudinally upward from the bottom nozzle 12, a plurality of transverse grids 16 axially spaced along the guide thimbles 14, an organized array of elongate fuel rods 18 transversely spaced and supported by the grids 16, and a top nozzle 20 including an adapter plate 22 which is attached to upper end portions of the guide thimbles 14. At their lower ends, the guide thimbles 14 are attached to the bottom nozzle 12. With such an arrangement of parts, the fuel assembly 10 forms an integral unit capable of being conventionally handled without damaging the assembly parts.

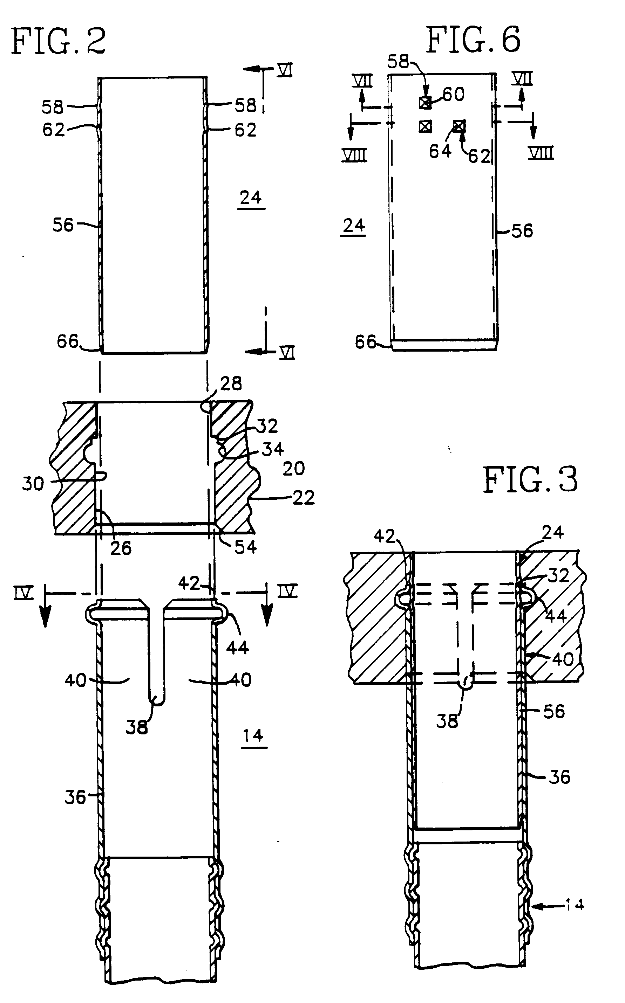

With particular reference to Figs. 2 and 3 of the drawings, the top-nozzle-to-guide-thimble attachment arrangement embodying the invention comprises an outer socket 26 defined by a control-rod passageway extending through the adapter plate 22 of the top nozzle 20 of the reconstitutable fuel assembly 10; an inner socket 36 constituting an upper end portion of the respective guide thimble 14; and a locking tube 24. It should be noted that an attachment arrangement such as shown and described herein would be provided for each of the guide thimbles 14 to which the top nozzle 20 is to be attached. The outer socket 26 has a smaller-diameter upper portion 28, a larger-diameter lower portion 30 with an annular groove 34 formed circumferentially in the wall thereof, and a ledge 32 formed between the upper and lower portions 28, 30.

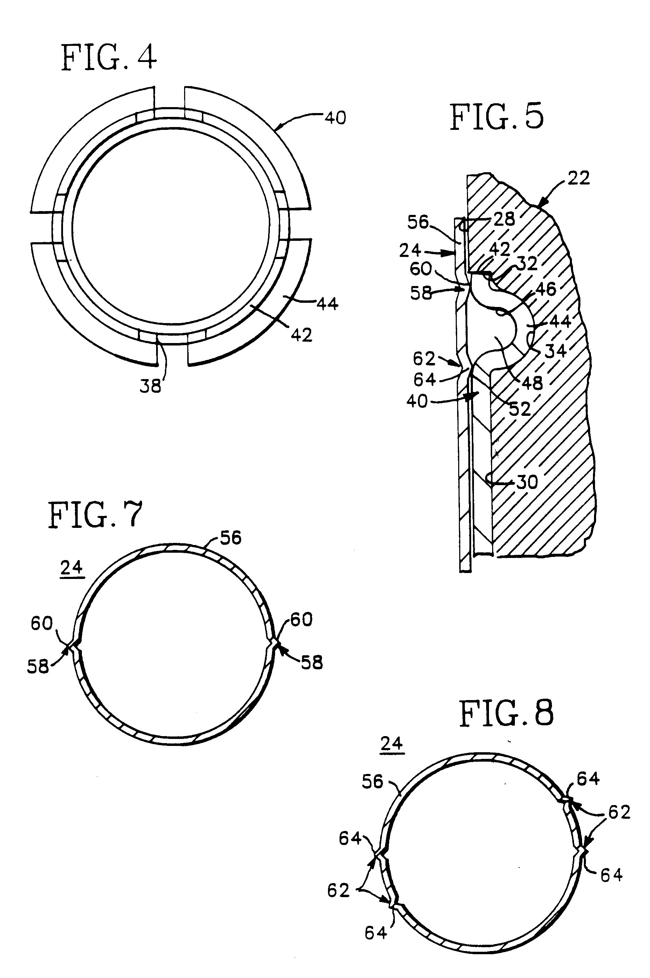

The inner socket 36 is shown herein as a sleeve bulge-fit to the guide thimble 14 but it will be appreciated that, instead, it could be an integral upper end portion of the guide thimble itself. As seen from Figs. 2 and 4, the inner socket 36 has an upper rim portion with a peripheral bulge 44 projecting radially outward therefrom, its inner surface 46 defining a substantially annular concavity 48 on the inside of the rim portion. The inner socket 36 also has formed therein a plurality (four, in the illustrated embodiment) of elongate slots 38 which extend longitudinally from the upper end 42 of the inner socket and through its rim portion including the peripheral bulge 44. The slots 38 are angularly spaced apart, the socket wall portions therebetween defining fingers 40. As seen best from Fig. 5, on each finger 40, the bottom or lowermost edge of the concavity 48 is taken as the location farthest from the upper end 42 of the inner socket and where the inner diameter of the inner socket 36 first begins to increase to create the concavity 48. When the top nozzle 20 is mounted on the guide thimbωe 14, the inner socket 36 is coaxially inserted into the outer socket 26 such that the fingers 40 have their upper ends positioned proximate the ledge 32, and have their outwardly bulged rim portions 44 transversely positioned, i.e. lodged, in the groove 34. During insertion, the preferably outwardly biased flexible fingers 40 on the inner socket 36 are resiliently compressed upon entering the lead-in chamfer 54 of the outer socket 26, and they elastically resume their normal or expanded positions when the bulge portions 44 thereon become aligned and mate with the annular groove 34 in the inner wall surface of the outer socket 26.

The locking tube 24, as shown in Figures 6, 7 and 8, comprises a sleeve-like tubular body 56 with a flexible wall which has thereon at least one embossed upper dimple 58 with an apex or tip 60, and at least two angularly spaced embossed lower dimples 62 each with a tip 64. When the top nozzle 20 is attached to the guide thimble 14, i.e. after insertion of each inner socket 36 into the associated outer socket 26, the locking tubes 24 are inserted coaxially into the respective inner sockets 36. The dimples 58 and 62 on the tubular body 56 of each locking tube 24 are arranged in a manner such that, when the locking tube 24 is in its proper locking position, as shown in Fig. 3 and particularly in Fig. 5, the tip 60 of its upper dimple 58 is located at an elevation below and proximate the ledge 32 of the outer socket 26, and the tips 64 of its lower dimples 62 are located at an elevation above and proximate the elevation of the lowermost edge 52 of the concavity or recess 48 in the upper rim portion of the inner socket 36. Moreover, the apex 60 of the upper dimple 58, being spaced from the longitudinal centerline of the tubular body 56 a distance greater than half the diameter of the upper portion 28 of the outer socket 26, projects radially into the larger-diameter lower portion 30 of the outer socket 26. This projection is made possible by creating a space, either by choosing dimensions, with respect to the rim/groove engagement, such that the upper end 42 of the inner socket is spaced away from the ledge 32 or by making the finger thickness less than the ledge width. Furthermore, the tips 64 of the lower dimples 62 on the installed locking tube 24 project radially into the concavity 48 a distance, from the longitudinal centerline of the tubular body 56, which is greater than the difference between the thickness of any given finger 40 and half the diameter of the lower portion 30 of the outer socket 26 (i.e., lower-portion radius minus finger-thickness). Finally, the lower dimples 62 are angularly spaced apart such that if one lower dimple 62 is placed in one of the slots 38, the other lower dimple 62 will be aligned and in contact with one of the fingers 40.

The locking tube 24 is installed by inserting it with sufficient force through the upper portion of the outer socket 26 and into the inner socket 36, its entry being facilitated by a lead-in taper 66 formed thereon. As the locking tube 24 enters the outer socket 26, its sleeve-like body 56 flexes resiliently and yields to allow passage of the dimples 58 and 62. It is noted that the flexibility of the wall of the locking tube is such that while the wall will yield to allow installation and removal of the locking tube through the application of predetermined forces, it will not flex and yield under any frictional forces experienced when a control rod or thimble plug of the like is withdrawn from the guide thimble. When the locking tube 24 reaches its proper seating depth within the outer and inner sockets, its upper dimple 58 will project radially outward beneath the ledge 32, and at least one of the lower dimples 62 will project radially outward into the concavity or recess 48 in one of the fingers 40. The fact that this condition has been reached is indicated during installation by the increase in force necessary to move the locking tube 24 axially up or down once it is properly seated. With the dimple-tip projecting distances as defined above, and with the spacing between the upper and lower dimples less than the distance existing between the ledge 32 and the lowermost edge 52 of the concavity 48 when the bulge 44 is lodged in the groove 34 of the outer socket, the upper dimple 58 will engage the ledge 32 of the passageway or outer socket 28 with sufficient force to prevent any unintentional raising of the locking tube 24, and at least one of the lower dimples 62 will be aligned with a finger 40 to transversely engage it at the lowermost edge 52 of the concavity 34, all with sufficient force to prevent any unintentional lowering of the locking tube 24 with respect to the adapter plate 22. The inserted locking tube 24 within the inner socket 36 will prevent inadvertent dislodgement of the outwardly bulged rim portions 44 of the fingers 40 from the peripheral groove 34 within the outer socket 26, and consequently will prevent inadvertent detachment of the top nozzle 20 from the guide thimble 14. When it is desired to remove the locking tubes in order to permit removal of the top nozzle, sufficient force is axially exerted upon each locking tube 24 to overcome the retaining action of the dimple engagement by causing the wall of the locking tube body 56 to flex and thereby release the locking tube 24 for withdrawal from the sockets 26 and 36.

The dimples 58 and 62 may be formed by an inner/outer die operation, as is within the purview of those skilled in the art. Preferably, the locking tube 24 has two upper dimples 58 (Fig. 7) and four lower dimples 62 (Fig. 8). In order to assist its sleeve-like body 56 in resiliently flexing during installation and removal of that locking tube 24, the lower dimples 62 are grouped in pairs each having its dimples 62 substantially diametrically opposed to each other, and with the two pairs angularly spaced apart from ten to forty-five, and preferably about thirty degrees, as shown in Fig. 8. As seen from Fig. 7, the upper dimples 58 are likewise arranged to be substantially diametrically opposed to each other, and the pair of upper dimples 58 is substantially aligned axially (having regard to the longitudinal axis of the locking tube) with one of the two pairs of lower dimples 62 (see Figure 6).

Typically, the locking tube 24 may be made of stainless steel and measure about 3.18 cm in length, 1.15 cm in inside diameter, and 0.4 mm in wall thickness. The dimples 58 and 62 are generally diamond-shaped, each having a square base measuring about 0.6 mm along each side, and having a height of about 0.13 mm at the apex 60 or tip 64. The upper dimples 58 typically are spaced about 3.3 mm from the top of the locking tube 24, and 2.8 mm from the lower dimples 62.

## Claims

1. An arrangement for releasably attaching the top nozzle of a reconstitutable nuclear fuel assembly to an upper end portion of a guide thimble, said arrangement comprising:

    (a) a tubular inner socket (36) defined by said upper end portion of the guide thimble (14), said inner socket having an upper rim portion with a peripheral bulge (44) projecting radially outward therefrom and defining a substantially annular concavity (48) on the inside of said rim portion, said tubular inner socket having formed therein elongate slots (38) which extend longitudinally from the upper end thereof and through said upper rim portion, and which are angularly spaced apart;

    (b) an outer socket (26) which extends through an adapter plate (22) forming part of the top nozzle (20) and has a smaller-diameter upper portion (28), a larger-diameter lower portion (30) for slideably receiving part of the inner socket including said upper rim portion thereof, and a peripheral ledge (32) formed between the upper and lower portions (28,30), said lower portion (30) having an annular groove (34) for receiving said peripheral bulge (44) formed in a wall portion thereof proximate said ledge (32); and

    (c) a locking tube (24) which is slideably insertable into the inner socket (36) through said upper portion (28) of the outer socket (26) and comprises a tubular body (56) having a resiliently flexible wall with dimples projecting from the outer surface thereof;

characterized in that said dimples comprise at least one upper dimple (58) and at least two lower dimples (62), said upper and lower dimples being arranged in a manner such that, when the locking tube (24) is in a predetermined locking position thereof within said inner socket (36), said or each upper dimple (58) has a tip (60) thereof disposed beneath and proximate said ledge (32) so as, in cooperation therewith, to resist raising of the locking tube from said predetermined locking position, and said lower dimples (62) each has a tip (64) thereof disposed above and proximate a surface portion of said inner socket (36) defining a lower edge portion of said concavity (48) so as, in cooperation therewith, to resist lowering of the locking tube from said predetermined locking position, said lower dimples (62) being angularly spaced apart a distance different from the angular spacing between said elongate slots (38) of the inner socket (36).

2. An arrangement according to claim 1, characterized in that the tip (60) of said or each upper dimple (58) is spaced from the longitudinal centerline of said tubular body (56) a distance greater than half the diameter of said smaller-diameter upper portion (28) of the outer socket (26); the tip (64) of each of said lower dimples (62) is spaced from the longitudinal centerline of said tubular body (56) a distance greater than the difference between the wall thickness of said rim portion of the inner socket (36) and half the diameter of the larger-diameter lower portion (30) of the outer socket (26); and the spacing between the upper and lower dimples (58, 62) is less than the distance existing between said ledge (32) and the lowermost edge (52) of said concavity (48) when said peripheral bulge (44) is lodged in the annular groove (34) of the outer socket (26).

3. An arrangement according to claim 1 or 2, characterized in that said locking tube (24) has two said upper dimples (58) and four said lower dimples (62).

4. An arrangement according to claim 3, characterized in that said upper dimples (58) are disposed on said tubular body (56) at locations substantially diametrically opposed to each other.

5. An arrangement according to claim 3 or 4, characterized in that said inner socket (36) has four said elongate slots (38) formed therein, and said lower dimples (62) are arranged in two pairs, the lower dimples (62) of each pair being disposed on said tubular body (56) at locations substantially diametrically opposed to each other, and the two pairs of lower dimples (62) being angularly spaced apart between ten and fourty-five degrees.

6. An arrangement according to claim 5, characterized in that said two pairs of lower dimples (62) are angularly spaced apart substantially thirty degrees.

7. An arrangement according to claim 5 or 6, characterized in that said upper dimples (58) are substantially aligned, in the longitudinal direction of the locking tube (24), with the lower dimples (62) of one of said two pairs.

**Patentansprüche**

1. Anordnung zum lösbaren Befestigen des Kopfstücks eines wiederherstellbaren Kernbrennelements am oberen Endteil eines Führungsrohrs, wobei die Anordnung aufweist:
   a) Eine durch den oberen Endteil des Führungsrohrs (14) gebildete rohrförmige innere Muffe (36), die einen oberen Randteil mit einem von diesem radial auswärts vorspringenden peripheren Wulst (44) aufweist, der eine im wesentlichen ringförmige Rundhöhlung (48) an der Innenseite des Randteils bildet, wobei die rohrförmige innere Muffe mit darin gebildeteten länglichen Schlitzen (38) versehen ist, die in Längsrichtung von ihrem oberen Ende aus und durch den oberen Randteil hindurch verlaufen und gegenseitige Winkelabstände haben,
   b) eine äußere Muffe (26), die durch eine Adapterplatte (22) hindurch verläuft, die einen Teil des Kopfstücks (20) bildet und einen oberen Teil (28) mit kleinerem Durchmesser, einen unteren Teil (30) mit größerem Durchmesser zur verschieblichen Aufnahme eines Teils der inneren Muffe einschließlich deren oberem Randteil, und eine periphere Schulter (32) aufweist, die zwischen oberem und unterem Teil (28, 30) gebildet ist, wobei der untere Teil (30) in seinem nahe der Schulter (32) gelegenen Wandbereich eine Ringnut (34) zur Aufnahme des peripheren Wulstes (44) aufweist, und
   c) ein Sicherungsrohr (24), das durch den oberen Teil (28) der äußeren Muffe (26) in die innere Muffe (36) einführbar ist und einen Rohrkörper (56) mit elastisch flexibler Wand und von deren Außenfläche vorspringenden Noppen aufweist, dadurch gekennzeichnet, daß die Noppen mindestens einen oberen Noppen (58) und mindestens zwei untere Noppen (62) umfassen, wobei die oberen und unteren Noppen in solcher Weise angeordnet sind, daß, wenn das Sicherungsrohr (24) sich in einer vorgegebenen Verriegelungsposition innerhalb der inneren Muffe (36) befindet, der oder jeder obere Noppen (58) eine sich unterhalb und nahe der Schulter (32) befindliche Spitze (60) aufweist, so daß er im Zusammenwirken damit einem Anheben des Sicherungsrohrs aus der vorgegebenen Verriegelungsposition entgegenwirkt, und daß die untere Noppen (62) jeweils eine Spitze (64) aufweisen, die oberhalb und nahe eines Oberflächenteils der inneren Muffe (36) gelegen sind, der einen unteren Randbereich der Rundhöhlung (48) bildet, so daß sie im Zusammenwirken damit einer Absenkung des Sicherungsrohrs aus der vorgegebenen Verriegelungsposition entgegenwirken, und daß die unteren Noppen (62) winkelmäßig um eine vom Winkelabstand zwischen den länglichen Schlitzen (38) der inneren Muffe (36) verschiedene Distanz winkelmäßig beabstandet sind.

2. Anordnung nach Anspruch 1, dadurch gekennzeichnet, daß die Spitze (60) des oder jedes oberen Noppens (58) von der Längsmittellinie des Rohrkörpers (56) einen Abstand hat, der größer als der halbe Durchmesser des den kleineren Durchmesser aufweisenden oberen Teils (28) der äußeren Muffe (26) ist, daß weiter die Spitze (46) jedes der unteren Noppen (62) von der Längsmittellinie des Rohrkörpers (56) einen Abstand hat, der größer als die Differenz zwischen der Wanddicke des Randteils der inneren Muffe (36) und dem halben Durchmesser des den größeren Durchmesser aufweisenden unteren Teils (30) der äußeren Muffe (26) ist, und daß der Abstand zwischen den oberen und unteren Noppen (58, 62) kleiner als die Distanz zwischen der Schulter (32) und dem untersten Rand (52) der Rundhöhlung (48) ist, wenn der periphere Wulst (44) in der Ringnut (34) der äußeren Muffe (26) sitzt.

3. Anordnung nach Anspruch 1 oder 2, dadurch gekennzeichnet, daß das Sicherungsrohr (24) zwei obere Noppen (58) und vier untere Noppen (62) aufweist.

4. Anordnung nach Anspruch 3, dadurch gekennzeichnet, daß die oberen Noppen (58) auf dem Rohrkörper (56) an im wesentlichen diametral einander gegenüberliegenden Stellen angeordnet sind.

5. Anordnung nach Anspruch 3 oder 4, dadurch gekennzeichnet, daß die innere Muffe (36) vier darin gebildete längliche Schlitze (38) aufweist, und daß die unteren Noppen (62) in zwei Paaren angeordnet sind, wobei die unteren Noppen (62) jedes Paars auf dem Rohrkörper (56) an im wesentlichen diametral einander gegenüberliegenden Stellen angeordnet sind und die zwei Paare unterer Noppen (62) einen Winkelabstand zwischen 10 und 45 Grad voneinander haben.

6. Anordnung nach Anspruch 5, dadurch gekennzeichnet, daß die beiden Paare unterer Noppen (62) einen Winkelabstand von etwa 30 Grad voneinander haben.

7. Anordnung nach Anspruch 5 oder 6, dadurch gekennzeichnet, daß die oberen Noppen (58) in Längsrichtung des Sicherungsrohrs (24) mit den unteren Noppen (62) eines der beiden Paare im wesentlichen fluchten.

## Revendications

1. Dispositif pour fixer de manière libérable l'embout supérieur d'un assemblage démontable de combustible nucléaire à une partie formant extrémité supérieure d'un tube-guide, ledit dispositif comprenant:

   (a) un manchon tubulaire intérieur (36) défini par ladite partie formant extrémité supérieure du tube-guide (14), ledit manchon intérieur ayant une partie formant rebord supérieur avec un renflement périphérique (44) faisant saillie radialement vers l'extérieur de celle-ci et définissant une concavité (48) sensiblement annulaire du côté interne de ladite partie formant rebord, ledit manchon tubulaire intérieur étant pourvu de fentes allongées (38) qui s'étendent longitudinalement depuis l'extrémité supérieure de celui-ci et à travers ladite partie formant rebord supérieur, et qui sont espacées angulairement les unes des autres;

   (b) un manchon extérieur (26) qui s'étend à travers une plaque adaptatrice (22) faisant partie de l'embout supérieur (20) et présente une partie supérieure (28) de petit diamètre, une partie inférieure (30) de grand diamètre pour recevoir d'une manière coulissante la partie du manchon intérieur comprenant ledit rebord supérieur, et un épaulement périphérique (32) formé entre les parties supérieure et inférieure (28, 30), ladite partie inférieure (30) comportant, formée dans une partie de sa paroi proche dudit épaulement (32), une gorge annulaire (34) pour recevoir ledit renflement périphérique (44); et

   (c) un tube de verrouillage (24) qui peut être introduit d'une manière coulissante dans le manchon intérieur (36) à travers ladite partie supérieure (28) du manchon extérieur (26) et qui comporte un corps tubulaire (56) ayant une paroi souple d'une manière élastique avec des bossettes dépassant de sa surface extérieure;

   caractérisé en ce que lesdites bossettes comprennent au moins une bossette supérieure (58) et au moins deux bossettes inférieures (62), lesdites bossettes supérieures et inférieures étant disposées de façon que, lorsque le tube de verrouillage (24) est dans une position prédéterminée de verrouillage de celui-ci dans ledit manchon intérieur (36), ladite ou chaque bossette supérieure (58) ait une pointe (60) disposée sous et au voisinage immédiat dudit épaulement (32) afin, en coopération avec celui-ci, d'empêcher le tube de verrouillage de monter en quittant ladite position prédéterminée de verrouillage, et de façon que lesdites bossettes inférieures (62) aient chacune une pointe (64) disposée au-dessus et au voisinage immédiat d'une partie de la surface dudit manchon intérieur (36) définissant une partie formant bord inférieur de ladite concavité (48) afin, en coopération avec celle-ci, d'empêcher le tube de verrouillage de descendre en quittant ladite position prédéterminée de verrouillage, lesdites bossettes inférieures (62) étant espacées angulairement les unes des autres d'une distance différente de l'espacement angulaire entre lesdites fentes allongées (38) du manchon intérieur (36).

2. Dispositif selon la revendication 1, caractérisé en ce que la pointe (60) de ladite ou de chaque bossette supérieure (58) est espacée de l'axe longitudinal dudit corps tubulaire (56) d'une distance supérieure au demi-diamètre de ladite partie supérieure (28) de petit diamètre du manchon extérieur (26); la pointe (64) de chacune desdites bossettes inférieures (62) est espacée de l'axe longitudinal dudit corps tubulaire (56) d'une distance supérieure à la différence entre l'épaisseur de la paroi dudit rebord du manchon intérieur (36) et le demi-diamètre de la partie inférieure (30) de grand diamètre du manchon extérieur (26); et l'espacement entre les bossettes supérieures et inférieures (58, 62) est inférieur à la distance existant entre ledit épaulement (32) et le bord inférieur (52) de ladite concavité (48) lorsque ledit renflement périphérique (44) est logé dans la gorge annulaire (34) du manchon extérieur (26).

3. Dispositif selon la revendication 1 ou 2, caractérisé en ce que ledit tube de verrouillage (24) a deux dites bossettes supérieures (58) et quatre dites bossettes inférieures (62).

4. Dispositif selon la revendication 3, caractérisé en ce que lesdites bossettes supérieures (58) sont disposées sur ledit corps tubulaire (56) à des emplacements sensiblement diamétralement opposés les uns aux autres.

5. Dispositif selon la revendication 3 ou 4, caractérisé en ce que ledit manchon intérieur (36) comporte quatre dites fentes allongées (38), et en ce que lesdites bossettes inférieures (62) sont disposées en deux paires, les bossettes inférieures (62) de chaque paire étant disposées sur ledit corps tubulaire (56) à des emplacements sensiblement diamétralement opposés les uns aux autres, et les deux paires de bossettes inférieures (62) étant espacées angulairement de dix à quarante cinq degrés l'une de l'autre.

6. Dispositif selon la revendication 5, caractérisé en ce que lesdites deux paires de bossettes inférieures (62) sont espacées angulairement sensiblement de trente degrés l'une de l'autre.

7. Dispositif selon la revendication 5 ou 6, caractérisé en ce que lesdites bossettes supérieures (58) sont sensiblement alignées, dans le sens longitudinal du tube de verrouillage (24), avec les bossettes inférieures (62) d'une desdites deux paires.

FIG.1

FIG.2

FIG.6

FIG.3

# FIG. 4

# FIG. 5

# FIG. 7

# FIG. 8

11